# EUROPEAN PATENT APPLICATION

(11) **EP 0 688 126 A2**
(43) Date of publication of application: **20.12.1995**
(21) Application number: 95303622.5
(22) Date of filing: 26.05.1995
(51) Int. Cl.: H04M 3/42, H04M 3/50

(54) **A voice messaging system**

(30) Priority: 14.06.1994 GB 9411889
(71) Applicant: GPT LIMITED, Coventry, CV3 1HJ (GB)
(72) Inventor: Fenner, Graham Edward, Wimborne, Dorset BH21 2JW (GB)
(74) Representative: Nicholson, Ronald

(57) **Abstract**

The invention provides a voice messaging system for a telecommunications exchange including a call screening facility ; means for identifying subscribers to the call screening facility ; call diversion means for diverting calls for said subscribers to the call screening facility ; a voice mail box for communicating with a calling party; and call screening means for the said subscribers including conference bridge circuits for establishing two-way communication between the calling party and the voice mail box, including the recordal of messages for the called party, one-way speech communication between the calling party and the called party, without the knowledge of the calling party, and, at the option of the called party, two-way speech communication between the called party and the calling party.

## Description

The invention relates to a voice messaging system for a telecommunications exchange having call screening for subscribers to the system.

The known voice messaging systems that utilize voice mail boxes for communicating with calling parties do not, in general, have the call screening facility normally available on most answerphone systems.

Voice message monitors are available for use in association with a telephone handset to answer calls made to the telephone but such monitors which normally comprise a loudspeaker for connection to, and broadcasting of, a call from a calling party, a lamp for indicating to the called party that a "message is waiting" and an autodial pushbutton, are connected to, but physically separate from, the telephone. In operation, the monitors are adapted to respond to the receipt of a call, if the called party does not answer within a predetermined number of rings of the associated telephone handset, and signal a recall to the telecommunications exchange for a three party call to be established. As a consequence of this, a voice mail box is connected to the calling party for recordal of the call and the call is relayed to, and broadcast by, the loudspeaker of the message monitor. If the called party wishes to take the call, then this can be done by picking up the phone and sending a signal to the message monitor to abort the recordal of the call and effect disconnection of the message monitor. The push button is used to effect automatic dialling to the voice mail box when the telephone subscriber is ready to retrieve a message recorded in the mail box.

The known voice message monitoring systems are not cost effective in that the monitors are separate rather bulky units, are technically, fairly complex and are not an ideal replacement for an answerphone.

It is an object of the present invention to provide a voice messaging system in which the intelligence of the voice mail platform is used to control a call screening system including three party conference bridge circuits.

The invention provides a voice messaging system for a telecommunications exchange including a call screening facility; means for identifying subscribers to the call screening facility; call diversion means for diverting calls for said subscribers to the call screening facility; a voice mail box for communicating with a calling party; and call screening means for the said subscribers including conference bridge circuits for establishing two-way communication between the calling party and the voice mail box, including the recordal of messages for the called party, one-way speech communication between the calling party and the called party, without the knowledge of the calling party, and, at the option of the called party, two-way speech communication between the called party and the calling party.

According to one aspect of the present invention, the establishment of two-way speech communication between the called party and the calling party causes disruption of the recordal of the message for the called party and the notification of the said disruption to the calling party.

According to another aspect of the present invention, the call screening means include a multi-port voice mail box, each port of which is connectable to a separate one of the set of conference bridge circuits; a set of conference bridge circuits, each having three ports, for receiving all calls for the said subscribers to the call screening facility, each of the calls being allocated a separate one of the conference bridge circuits, the three ports of the allocated circuit being respectively connected to the calling party, the called party and a port of the voice mail box for recordal of the call; and connection means for permitting the called party to receive the call from a calling party, without the knowledge of the calling party, and to interrupt the recordal of the received call and be connected to the calling party. The calling party, the called party and the port of the voice mail box are each connected to a respective one of the ports of the allocated conference bridge by a two-way communication link, and one way of the two-way communication link for the called party is connected directly to the calling party allowing the transmission of speech from the calling party to the called party, without knowledge of the calling party. The other way of the two way communication link for the transmission of speech between the called party and the calling party includes the connection means which are adapted to selectively connecting the called party to the calling party under the control of the call screening means.

The connection means of the call screening facility include normally-open switching means and the calling screening facility includes control means, responsive to the receipt of a signal from the called party, to interrupt the recordal of the call from the calling party, give an indication to the calling party that call recordal has been interrupted, and effect operation, and thereby closure, of the switching means thereby allowing the transmission of speech from the called party to the calling party. The control means, include detection means responsive to the receipt of a dual tone multi-frequency signal, or speech, from the called party, to generate a signal for effecting interruption of call recordal, notification to the calling party that call recordal has been interrupted and operation, and thereby closure, of the switching means.

According to a further aspect of the present invention, the voice messaging system includes means, responsive to the receipt of a signal from the called party, for instructing the voice mail box to discard a recorded message, without the knowledge of a calling party.

The conference bridge circuits of the call screening facility are normally an integral part of the voice messaging system to provide a self-contained unit, although the conference bridge circuits could be remotely located at the telephone exchange, and be under the control of the voice messaging system.

The foregoing and other features according to the present invention will be better understood from the following description with reference to the accompanying drawings, in which:-
Figure 1 diagrammatically illustrates, in the form of a block diagram, a voice messaging system according to the present invention;
Figure 2 diagrammatically illustrates, in the form of a block diagram, one arrangement for the voice messaging system diagrammatically illustrated in Figure 1 of the drawings; and
Figure 3 diagrammatically illustrates, in the form of a block diagram, another arrangement for the voice messaging system diagrammatically illustrated in Figure 1 of the drawings.

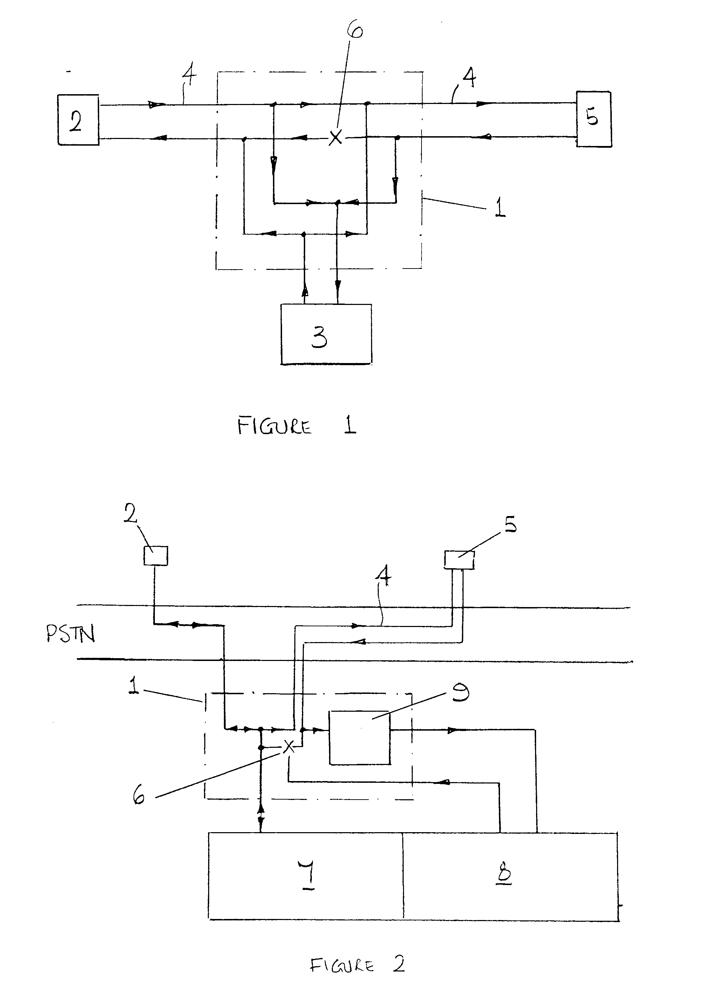

The voice messaging system diagrammatically illustrated, in the form of a block diagram, in Figure 1 of the drawings, includes call screening means comprising a three party conference bridge circuit 1 fores- tablishing two-way communication between a calling party 2 and a voice mail box 3, one-way speech communication, via a path 4, between the calling party 2 and the called party 5 and, on closure of a normally open switch 6 by the called party 5 (by means not illustrated), two-way speech communication between the called party 5 and the calling party 2.

Thus, the three ports of the conference bridge circuit 1 are respectively allocated to the calling party 2, the called party 5 and a port of a voice mail box 3.

The two-way communication between the calling party 2 and the voice mail box 3 is effected automatically, on receipt of a call, and results in the called party 5 receiving a recorded greeting message and, at the option of the calling party 2, the recordal of the message in the voice mail box 3 for the called party 5.

In practice, the establishment of the two-way speech communication link between the called party 5 and the calling party 2 will cause disruption of the recordal of the message for the called party 5 and notification of the disruption to the calling party 2.

The speech connection means provide by the normally open switch 6 provides subscribers to the voice messaging system with the facility of being able to listen to callers, who are leaving voice mail messages for the subscribers in the voice mail box 3, without the calling party 2 being aware and have the option, through closure of the switch 6, to be connected to the calling party 2 during the message recording period.

The voice messaging system according to the present invention is adapted to recognise from its subscriber database whether, or not, the voice mail box being called has the call screening service and, if so, to divert all calls for such subscribers to the call screening facility and invoke a controllable three party conference function, using the conference bridge circuit 1. The diversion of a call to the call screening service causes a call attempt to be made to the registered telephone number of the subscriber concerned, during the period when the subscriber's personal greeting is being played to the calling party 2. The ringing duration for the call to the subscriber's registered telephone number is a configurable quantity.

If the called party 5 answers the call, then a one-way speech communication link will be established via the path 4 between the calling party 2 and the called party 5 thereby allowing the called party 5 to listen to the interaction between the calling party 2 and the voice mail box 3, without the knowledge of the calling party 2, and have the options to:
- continue to listen until the interaction is complete; or
- hang up, and allow the calling party 2 to continue to interact with the voice mail box 3; or
- interrupt the message recording and be connected to the calling party 2, in which case, the voice mail box 3 will cease the recordal of the message, erase the recorded part of the message, and give an indication to the calling party 2 that these actions have been effected.

The indication given to the calling party 2 that the recording of the message has been interrupted can be in the form of a sequence of tones transmitted by the voice mail box 3 to the calling party.

As stated above, during the period of time the called party 5 is listening to the interaction between the calling party 2 and the voice mail box 3;
- the calling party 2 is totally unaware that the subscriber is listening to the call and
- the communication path between the subscriber and the three party conference bridge 1 is disconnected by way of the normally open switch 6.

As an additional feature, the subscribers to the call screening service may have the facility to signal to the voice messaging system, without the knowledge of calling party 2, that the recorded message should be discarded.

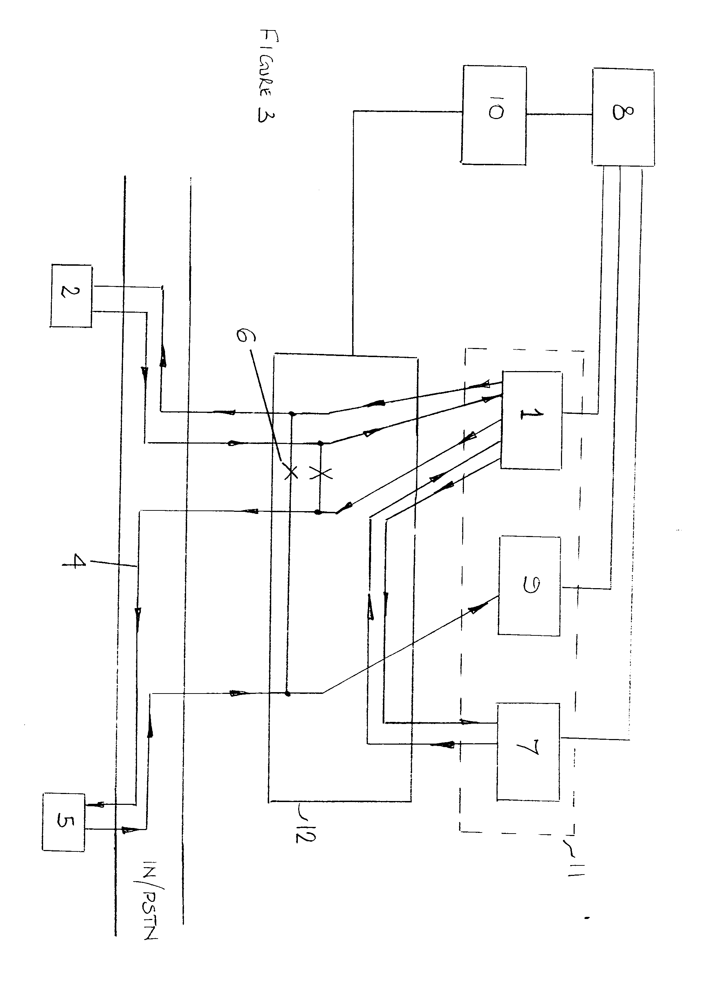

The voice messaging system diagrammatically illustrated in Figure 2 of the drawings, in the form of a block diagram, is one arrangement for the voice messaging system of Figure 1 and, in particular, the call screening facility for allowing a voice mail box user, i.e. the called party 5, to overhear a caller, i.e. the calling party 2, who is leaving a message in a voice mail box 7, the voice mail box user having, in a manner to be subsequently outlined, the facility to choose to interrupt the leaving of a message and to thereafter communicate directly with the calling party 2.

With the arrangement of Figure 2, the voice messaging system includes call screening means comprising a set of three party conference bridge circuits 1 for receiving all calls requiring the call screening service and a multi-port voice mail box 7.

The automatic two-way communication established, on receipt of a call, between the calling party 2 and a port of a multi-port voice mail box 7, via the conference bridge circuits 1, is indicated by a single line, in Figure 2. The one-way speech communication between the calling party 2 and the called party 5 which is indicated by the path 4, enables the called party to listen to the calling party 2 without that party's knowledge. The normally open switch 6, in the other of the paths of the two-way connection between the called party 5 and the conference bridge circuits 1, is connected to an output terminal of a voice mail box control unit 8. An input to the control unit 8 is connected to the output of a detection unit 9, the input of which is connected to the said other path of the two-way connection between the called party 5 and the conference bridge circuit 1. In practice, the detection unit 9 is adapted, in response to the receipt of a dual tone multi-frequency (DTMF) signal (or speech) from the telephone handset of the called party 5, to generate an output signal for application to the control unit 8. On receipt of the signal from the detection unit 9, the control unit 8 generates an output signal for effecting operation, and thereby closure, of the switch 6 and the establishment of a two-way communication path between the calling party 2 and the called party 5 via the conference bridge circuits 1.

The operation of the call screening facility of the voice messaging system of Figure 2 is generally in accordance with the method outlined above for the operation of the voice messaging system of Figure 1 of the drawings. The system operates in a manner whereby the set of three-party conference bridge circuits 1 are allocated, in turn, in response to the receipt of calls for the subscribers to the call screening facility. Thus, on receipt of a call, the call is allocated to one port of the next free conference bridge circuit 1 and a second port of the allocated bridge circuit is allocated to the next free port of the multi-port voice mail box 7. Each of the ports of the voice mail box 7 is connectable to a separate one of the set of conference bridge circuits 1 under the control of the control unit 8.

As with the voice messaging system of Figure 1 of the drawings, a database search is made to identify the network address (telephone number), nominated by the subscriber concerned, for delivery of the call screening call. A call attempt is then made to that telephone number, using the third port of the allocated conference bridge circuit 1. The speech path from the third port of the conference bridge circuit to the network address of the called party 5 is, as previously stated, intentionally set to be one-way only; speech transmission in the reverse direction being prevented by the normally open switch 6.

A distinctive ring cadence is used for the call attempt to the network address of the called party 5 as a means of notifying the called party 5 that the call attempt is a voice message screening call. The duration of the call attempt is limited, as previously stated, to a preset value. During the period of the call attempt, the voice messaging system continues to operate in its normal programmed sequence of playing a greeting to the calling party 2 and recording a message for the called party 5.

If the call attempt is answered by the called party 5, that party will overhear the dialogue between the calling party 2 and the voice mail box 7.

Interruption of the normal programmed sequence of the voice messaging system can be effected by the called party 5 dialling a DTMF tone sequence which will be recognised by the detection unit 9 and thereby cause a signal to be applied to the voice mail box control unit 8, in the manner outlined above. On receipt of this signal, the control unit 8 will cause the voice mail box 7 to:
- stop recording;
- play a tone sequence to indicate to the calling party that the recording has been interrupted;
- connect the speech path from the called party 5 to the calling party 2 by effecting operation of the switch 6;
- release the voice mail box 7 and its telephony port from the call;
- delete the partially recorded message; and
- supervise the call between the calling party 2 and the called party 5.

The call screening facility of the voice messaging system according to the present invention is preferably an integral part of a subscriber's voice messaging system to thereby provide a self-contained unit. In an alternative arrangement for the voice message system of the present invention, the call screening facility may form part of the capabilities of the subscriber's telephone exchange, i.e. the facility to connect three parties in conference. Thus, the present invention can be provided by a combination of a voice messaging system and the capabilities of a telephone exchange in which the three party conference facility of the exchange is remotely controlled by the voice messaging system to allow, or disallow, speech path connection between a calling party 2 and the called party 5, and the voice mail box functions, referred to above.

In another arrangement for the voice messaging system according to the present invention which is diagrammatically illustrated in Figure 3 of the drawings, the call screening facility could be implemented using an "Intelligent Network" architecture in which the control for the facility would be provided by a "Service Control Function" (SCF). With this arrangement, the SCF would treat the conference bridge functions and the voice mail box functions as "Intelligent Peripherals", or "Specialised Resource Functions" (SRFs).

In particular, the voice messaging system diagrammatically illustrated in Figure 3 of the drawings, in the form of a block diagram which is another arrangement for the voice messaging system of Figure 1 and, in particular, the call screening facility for allowing a voice mail box user, i.e. the called party 5, to overhear a caller, i.e. the calling party 2, who is leaving a message in a voice mail box 7, the voice mail box user having, in a manner to be subsequently outlined, the facility to choose to interrupt the leaving of a message and to thereafter communicate directly with the calling party 2.

With the arrangement of Figure 3, the voice messaging system is incorporated in the Intelligent Network (IN), and includes call screening means comprising a set of three party conference bridge circuits 1 for receiving all calls requiring the call screening service, a detection unit 9 and a multi-port voice mail box 7. The circuits 1, detector unit 9 and mailbox 7 provide a specialised resource function 11.

The automatic two-way communication established, on receipt of a call, between the calling party 2 and a port of a multi-port voice mail box 7, via the conference bridge circuits 1, is initiated by a special service logic program in a service control function (SCF) 8. The one-way speech communication between the calling party 2 and the called party 5 which is indicated by the path 4, is also set up by the SCF 8 and enables the called party to listen to the calling party 2 without that party's knowledge. The normally open switch 6, in the other of the paths of the two-way connection between the called party 5 and the conference bridge circuits 1, is connected to an output terminal of a voice mail box control unit. The service logic program in the SCF 8 is instructed to recognise the output of a detection unit 9, the input of which is connected to the said other path of the two-way connection between the called party 5 and the conference bridge circuit 1. In practice, the detection unit 9 is adapted, in response to the receipt of a dual tone multi-frequency (DTMF) signal (or speech) from the telephone handset of the called party 5, to collect digits and report them over standard interfaces to the SCF 8. On receipt of the signal from the detection unit 9, the SCF 8 instructs the service switching function (SSF) 10 to close switch 6 which forms part of the call connection function (CCF) 12, and establish a direct two-way communication path between the calling party 2 and the called party 5.

The operation of the call screening facility of the voice messaging system of Figure 3 is generally in accordance with the method outlined above for the operation of the voice messaging system of Figure 1 of the drawings. The system operates in a manner whereby the set of three-party conference bridge circuits 1 are allocated, in turn, in response to the receipt of calls for the subscribers to the call screening facility. Thus, on receipt of a call, the call is allocated to one port of the next free conference bridge circuit 1 and a second port of the allocated bridge circuit is allocated to the next free port of the multi-port voice mail box 7. Each of the ports of the voice mail box 7 is connectable to a separate one the set of conference bridge circuits 1 under the control of the SCF 8.

As with the voice messaging system of Figure 1 of the accompanying drawings, a database search is made to identify the network address (telephone number), nominated by the subscriber concerned, for delivery of the call screening call. A call attempt is then made to that telephone number, using the third port of the allocated conference bridge circuit 1. The speech path from the third port of the allocated conference bridge circuit 1 to the network address of the called party 5 is, as previously stated, intentionally set to be one-way only; speech transmission in the reverse direction being prevented by the normally open switch 6.

A distinctive ring cadence is used for the call attempt to the network address of the called party 5 as a means of notifying the called party 5 that the call attempt is a voice message screening call. The duration of the call attempt is limited, as previously stated, to a preset value. During the period of the call attempt, the voice messaging system continues to operate in its normal programmed sequence of playing a greeting to the called party 2 and recording a message for the called party 5.

If the call attempt is answered by the called party 5, that party will overhear the dialogue between the calling party 2 and voice mail box 7.

Interruption of the normal programmed sequence of the voice messaging system can be effected by the called party 5 dialling a DTMF tone sequence which will be recognised by the detection unit 9 and thereby cause a signal to be applied to the SCF 8, in the manner outlined above. On receipt of this signal, the SCF 8 will cause the voice mail box 7 to:
- stop recording;
- play a tone sequence to indicate to the calling party that the recording has been interrupted; and
- will cause the SSF 10 to connect the speech path from the called party 5 to the calling party 2 by effecting operation of the switch 6.

The call screening facility of the present invention may also be used to provide an enhanced service observation facility. With this arrangement, calls marked (usually randomly) for service observation can be assigned to the call screening facility and be routed to a service observation station where the call can be monitored for quality of service.

More specifically, a call marked for service observation would be connected to the call screening facility and one of the set of conference bridge circuits would be allocated to the call. In practice, the marked call would be connected to one port of the allocated conference bridge circuit i.e. the port to which the calling party 2 of Figures 1 and 2 of the drawings is connected, and would be automatically routed to a service observation station which would be connected to that port of the allocated conference bridge circuit to which the voice mail box is connected in Figures 1 and 2 of the accompanying drawings. The observation of the marked call would therefore, be automatically effected, in a manner dictated by the service observation station, as, and when, the call is marked. As with the arrangements of Figures 1 and 2 of the drawings, a one-way communication path could be established between the third port of the allocated conference bridge circuit and a telephone handset, i.e. the called party 5 of Figures 1 and 2, as a means of providing an additional observation facility, with the option of a two-way communications path through operation of the normally open switch 6.

The call screening facility of the present invention could also find application in audiotext service monitoring in which an audiotext service provider can obtain service usage information from a service which does not make automatic recordings of users (such as an information line). Monitoring this service using the call screening facility of the present invention is unobtrusive to callers and effective over the Public Switched Telephone Network (PSTN). Currently known audiotext service monitoring systems are normally only effective if the service provider is at the same location as the Audiotext equipment.

This arrangement would be similar to the enhanced service observation facility referred to above in that each of the users of the audio text service would be allocated a separate one of the set of conference bridge circuits and would be automatically connected to the service observation and/or monitoring station. The third port of the conference bridge circuit could, if desired, be used to communicate directly with a user of the service, or separately monitor the call without the knowledge of the caller using the audiotext service.

## Claims

1. A voice messaging system for a telecommunications exchange, characterised in that the system includes a call screening facility; means for identifying subscribers to the call screening facility; call diversion means for diverting calls for said subscribers to the call screening facility; a voice mail box (3, 7) for communicating with a calling party (2); and call screening means for the said subscribers including conference bridge circuits (1) for establishing two-way communication between the calling party (2) and the voice mail box (3), including the recordal of messages for the called party (5), one-way speech communication (4) between the calling party (4) and the called party (5), without the knowledge of the calling party (4), and, at the option of the called party (5), two-way speech communication between the called party (5) and the calling party (4).

2. A voice message system as claimed in claim 1, characterised in that the establishment of two-way speech communication between the called party (5) and the calling party (4) causes disruption of the recordal of the message for the called party (5) and the notification of the said disruption to the calling party (4).

3. A voice messaging system as claimed in claim 2, characterised in that the call screening means include a multi-port voice mail box (7), each port of which is connectable to a separate one of the set of conference bridge circuits (1); a set of conference bridge circuits, each having three ports, for receiving all calls for the said subscribers to the call screening facility, each of the calls being allocated a separate one of the conference bridge circuits, the three ports of the allocated circuit being respectively connected to the calling party

(2), the called party (5) and a port of the voice mail box (7) for recordal of the call; and connection means (6) for permitting the called party (5) to receive the call from a calling party (2), without the knowledge of the calling party (2), and to interrupt the recordal of the received call and be connected to the calling party (2).

4. A voice messaging system as claimed in claim 3, characterised in that the calling party (2), the called party (5) and the port of the voice mail box (7) are each connected to a respective one of the ports of the allocated conference bridge (1) by a two-way communication link, in that one way of the two-way communication link for the called party (5) is connected directly to the calling party (2)allowing the transmission of speech from the calling party (2) to the called party (5), without knowledge of the calling party (2), in that the other way of the two way communication link for the transmission of speech between the called party (5) and the calling party (2) includes the connection means (6), and in that the connection means (6) are adapted to selectively connect the called party (5) to the calling party (4) under the control of the call screening means.

5. A voice messaging system as claimed in claim 3 or claim 4, characterised in that the connection means (6) include normally-open switching means.

6. A voice messaging system as claimed in claim 5, characterised in that the call screening means in- dude control means (8), responsive to the receipt of a signal from the called party (5), to interrupt the recordal of the call from the calling party (2), give an indication to the calling party (2) that call recordal has been interrupted, and effect operation, and thereby closure, of the switching means (6) thereby allowing the transmission of speech from the called party (5) to the calling party (2).

7. A voice messaging system as claimed in claim 5, characterised in that the control means (8) include detection means (9), responsive to the receipt of a dual tone multi-frequency signal, or speech, from the called party (5), to generate a signal for effecting interruption of call recordal, notification to the calling party (2) that call recordal has been interrupted, and operation, and thereby closure, of the switching means (6).

8. A voice messaging system as claimed in any one of the preceding claims, characterised in that the system further includes means, responsive to the receipt of a signal from the called party (5), for instructing the voice mail box to discard a recorded message, without the knowledge of a calling party (2).

9. A voice messaging system as claimed in any one of the preceding claims, characterised in that the conference bridge circuits (1) are an integral part of the voice messaging system.

10. A voice messaging system as claimed in any one of the preceding claims 1 to 8, characterised in that the conference bridge circuits (1) form part of the telecommunications exchange and in that the voice messaging system includes means for remotely controlling the operation of the conference bridge circuits to allow, or disallow, speech path connection between a calling party (2), a called party (5) and the voice mail box (3, 7) of the voice messaging system.

11. A voice messaging system as claimed in claim 1, characterised in that the system includes an intelligent network (IN) for implementing the call screening facility, and service point control means for controlling the call screening facility and in that the establishment, or otherwise, of the communications between the called party (5), the calling party and the voice mail box (7), and the functions of the voice mail box (7) are treated, by the service point control means, as either intelligent peripherals, or specialised resource functions.

12. Avoice messaging system as claimed in claim 11, characterised in that the system includes a resource function unit (11) for the call screening means, including the conference bridge circuit (1), the detection means (9) and the multi-port voice mail box (7); a call connection function (12) including the connection means (6); and a service switching function (10) having an inputthere- of connected to service control means (8) and an output thereof connected to the call connection function (12).

13. A voice messaging system as claimed in claim 12, characterised in that the service control means (8) are adapted to establish, on receipt of a call, automatic two-way communication between the calling party (2) and a port of the voice mail box (7) via the conference bridge circuits (1), one-way speech communication between the calling party (2) and the called party (5), without the knowledge of the calling party (2), and, at the option of the called party (5), two-way speech communication between the called party (5) and the calling party (2), and in that the service control means (8) are adapted to recognize the output of the detection means (9).

14. A voice messaging system as claimed in claim 13, characterised in that the detection means (9) are adapted, in response to the receipt of a dual tone multi-frequency signal, or speech, from the calling party (2), to collect digits and to generate, at the output thereof, a signal for application to the service control means (8) via interface means, and in that the service control means (8) are adapted, on receipt of a signal from the detection means (9), to instruct the service switching function (10) to establish a direct two-way communication path between the calling party (2) and the called party (5) via the call switching function (12).

15. A telecommunications exchange including a voice messaging system as claimed in any one of the preceding claims.

16. A telephone call service observation system including a voice messaging systems as claimed in any one of the preceding claims 1 to 14.

17. An audiotext service monitoring system including a voice messaging system as claimed in any one of the preceding claims 1 to 14.
